# EUROPÄISCHE PATENTSCHRIFT

(11) **EP 2 746 237 B1**
(45) Veröffentlichungstag und Bekanntmachung des Hinweises auf die Patenterteilung: **12.02.2020**
(21) Anmeldenummer: 12008433.0
(22) Anmeldetag: 19.12.2012
(51) Int. Cl.: C04B 28/02, C04B 40/00, C04B 103/14

(54) **Anreger fuer Zement**
Activator for cement
Activateur pour ciment

(43) Veröffentlichungstag der Anmeldung: 25.06.2014
(73) Patentinhaber: HeidelbergCement AG, 69120 Heidelberg (DE)
(72) Erfinder: Zajac, Maciej, 69181 Leimen (DE); Schmitt, Dirk, 69181 Leimen (DE); Bolte, Gerd, 69198 Schriesheim (DE); Walter, Martin, 41705 Osek (CZ)
(74) Vertreter: Zellentin & Partner mbB Patentanwälte

(56) Entgegenhaltungen:
- WO-A1-2011/134025
- CN-A- 1 401 606
- CN-A- 1 970 483
- CN-A- 102 001 840
- CN-B- 101 386 482
- LIN, Z. ET AL: "Manufacture of high-strength high-slag cement", CHEMICAL ABSTRACTS, CHEMICAL ABSTRACTS SERVICE (C A S), US, Bd. 119, Nr. 12, 13. Dezember 1993 (1993-12-13), Seite 386, XP000408131, ISSN: 0009-2258 & CN 1 071 902 A (UNIV WUHAN POLYTECHNIC [CN]) 12. Mai 1993 (1993-05-12)

## Beschreibung

Die vorliegende Erfindung betrifft einen Anreger für Zement, insbesondere für Portlandkomposit- und Kompositzement, Bindemittel, die den Anreger enthalten sowie ein Verfahren zur Steigerung der Druckfestigkeit, insbesondere der Frühfestigkeit, von hydraulische Bindemittel enthaltenden Baustoffen durch Zugabe des Anregers.

Die Produktion von Zement ist für einen erheblichen Teil der weltweiten CO₂ Produktion verantwortlich. Es sind deshalb bereits eine Vielzahl an Techniken entwickelt worden, um Zement umweltverträglicher zu machen.

Ein wichtiger Ansatz ist die Verwendung von Portlandkomposit- bzw. Kompositzement anstelle von Portlandzement. In Portlandkomposit- und Kompositzement wird ein Teil bis hin zum überwiegenden Teil des Portlandzementklinkers durch industrielle Neben- und Abfallprodukte wie Hüttensand und Flugasche und/oder durch natürliche Puzzolane ersetzt. Diese Substanzen werden als latent-hydraulisch bzw. puzzolanisch bezeichnet.

Latent-hydraulische Substanzen, beispielsweise Hüttensand, besitzen wie Zement die Fähigkeit hydraulisch zu erhärten, wobei dafür eine Anregung nötig ist. Diese Anregung erfolgt durch den Portlandzementanteil und/oder zugefügte Anreger.

Puzzolanische Materialien, beispielsweise natürliche Puzzolane wie Trass und der überwiegende Teil der Flugaschen, können bei der Zementerhärtung in den Zementstein eingebaut werden, verfügen aber nicht über eine Zusammensetzung, die zu einer eigenen hydraulischen Erhärtung befähigt.

Portlandkomposit- und Kompositzement haben jedoch den Nachteil, dass die Entwicklung der Druckfestigkeit langsamer als für den entsprechenden Portlandzement ohne Ersatz von Portlandzementklinker durch latent-hydraulische und/oder puzzolanische Materialien verläuft. Die Frühfestigkeit, d.h. die Druckfestigkeit, welche innerhalb von wenigen Stunden bis innerhalb eines Tages erreicht wird, ist in der Regel geringer, meist deutlich geringer. Die Endfestigkeit, laut Norm nach 28 Tagen gemessen, kann - beispielsweise bei Hüttensand als Zusatz- vergleichbar oder sogar höher sein. Sehr häufig ist sie aber geringer, z.B. bei Flugasche als Zusatz. Eine mit dem Ausgangs-Portlandzement vergleichbare Druckfestigkeit wird häufig erst zu viel späteren Zeitpunkten erreicht.

Zwar kann die mit der langsameren Erhärtung einhergehende, geringere Wärmeentwicklung als Vorteil gesehen werden. Dies ist bei massiven Bauten, z.B. Staudämmen, wichtig, damit die bei der Erhärtung in den sehr dicken Teilen freiwerdende Wärme nicht zu einer zu starken Aufheizung führt. Eine verlangsamte Druckfestigkeitsentwicklung ist jedoch überwiegend unerwünscht, denn sie bedeutet längere Wartezeiten, z.B. für einen Weiterbau, die Entschalung beispielsweise von Fertigbauteilen und vieles mehr. Zum Ausgleich der verlangsamten Druckfestigkeitsentwicklung, bzw. zur Steigerung der Frühfestigkeit, sind daher schon verschiedene Vorschläge gemacht worden, sowohl speziell für Portlandkomposit- und Kompositzement als auch allgemein unabhängig von der Zementart.

US 7,867,333 B2 schlägt einen Mörtel auf Basis von Portlandzement vor, bei dem die Frühfestigkeit durch Feinstmahlen von Zement und/oder Sand gesteigert werden soll. Hohe Mengen feinstgemahlene Komponenten sind aber energetisch ungünstig und auch in der Verarbeitung aufwendiger als Zement bzw. Bindemittel normaler Feinheit.

WO 2011/134025 beschreibt die Steigerung der Frühfestigkeit von Portlandkomposit- und Kompositzement durch Alkalisulfate, insbesondere Natriumsulfat. Eine weitere Verbesserung wird gemäß WO 2011/134025 durch die Anwesenheit von Calciumsulfat erreicht. Nachteilig an diesem Vorschlag ist der hohe Gehalt an Alkali, der die unerwünschte Alkali-Kieselsäurereaktion begünstigt. Zudem leidet bei hohen Alkaligehalten häufig die Endfestigkeit (28-Tage Druckfestigkeit).

US 2012/0024198 A1 beschreibt eine Bindemitteltrockenmischung, die Portlandzementklinker, Flugasche, Alkalisulfat, eine SO₃-Quelle und "Zusatzmaterial" enthält, wobei außerdem die Mahlfeinheit des Portlandzementklinkers und dessen Gehalt nach einer Formel abgestimmt sein sollen. Das Zusatzmaterial soll eine Feinheit von D₉₀ ≤ 200 µm haben, als Zusatzmaterial sind inerte Füllstoffe wie Kalkstein bevorzugt.

Aus US 4,990,190 ist bekannt, dass Triisopropanolamin die Festigkeit von Zement mit einem Anteil C₄AF von mindestens 4 % steigert.

Außerdem ist aus Chemical Abstracts 119:255518t zu CN 1071902 eine Schlackemischung bekannt, die in Mengen von 40 bis 80 % einem Bindemittel aus Zement und Gips zugesetzt werden soll. Die Mischung enthält neben Schlacke noch gelöschten Kalk, einen Aktivator umfassend NaOH oder Na₂CO₃ oder Na₂SO₄, und ein Dispergiermittel (Harnstoff o. Triethanolamin o. Ca-Lignosulfat). Die Feinheit beträgt 400 - 900 m²/kg. Eine Steigerung der Frühfestigkeit ist von der Schlackemischung nicht zu erwarten. Die CN 1401606 betrifft eine Flugaschemischung zur Herstellung von Hochleistungszement. Gemäß Zusammenfassung soll die Bindemittelmischung ein alkalisches Kalkmaterial, Gips, Flugasche, Natriumsulfat und Calciumcarbonat umfassen, wobei sich zur Feinheit eine Angabe 45 µm im Text findet.

Es besteht weiter Bedarf an Möglichkeiten, die Frühfestigkeit und ggfs. auch die Endfestigkeit von Zement, speziell von Portlandkomposit- und Kompositzement, zu steigern und dabei die Nachteile der bekannten Anreger zu vermeiden oder zu verringern.

Überraschend wurde nun gefunden, dass der kombinierte Zusatz von einer hydraulisch reaktiven Feinstkomponente, einem Calciumsulfat, einem Alkalisulfat/Alkalisulfit und einem Komplexbildner aus der Gruppe der Alkanolamine eine Beschleunigung der Druckfestigkeitsentwicklung bewirkt, ohne unakzeptable Mengen Alkali einzubringen. Die Endfestigkeit wird dabei nicht verringert, meist sogar ebenfalls gesteigert. Damit können Portlandkomposit- und Kompositzemente besser nutzbar gemacht werden, so dass eine Einsparung an energieintensivem Portlandzementklinker und natürlichen Rohstoffen ohne Einbußen bei der Festigkeitsentwicklung und Verarbeitbarkeit ermöglicht wird.

Die obige Aufgabe wird daher gelöst durch einen Anreger zur Festigkeitssteigerung für Zement umfassend:
- eine hydraulisch reaktive Feinstkomponente mit einer Feinheit von mindestens 10.000 cm²/g nach Blaine, enthaltend Zementklinker, Calciumsulfat und Kalkstein
- ein Calciumsulfat mit einer Feinheit von 3500 bis 5000 cm²/g nach Blaine
- ein Alkalisulfat und/oder Alkalisulfit und
- einen Komplexbildner aus der Gruppe der Alkanolamine, sowie durch Bindemittel, welche Zement und den Anreger enthalten. Die Aufgabe wird außerdem durch ein Verfahren und eine Verwendung zur Beschleunigung der Druckfestigkeitsentwicklung von Zement gelöst, bei welchem dem Zement eine hydraulisch reaktive Feinstkomponente, ein Calciumsulfat, ein Alkalisulfat und/ oder Alkalisulfit und ein Komplexbildner aus der Gruppe der Alkanolamine zugefügt wird.

Als Zement kommen insbesondere Portlandkomposit- und Kompositzemente, speziell solche mit Flugasche als Hauptbestandteil, in Betracht. Der erfindungsgemäße Anreger erweist sich aber auch bei anderen Zementen, beispielsweise, aber nicht ausschließlich, bei Portlandzement, Hüttenzement, Puzzolanzement usw. als wirksam. Besonders bevorzugt sind als Zement: Portlandhüttenzement, Portlandsilicastaubzement, Portlandpuzzolanzement, Portlandflugaschezement, Portlandschieferzement, Portlandkalksteinzement, Portlandkompositzement, Hochofenzement, Puzzolanzement, und Kompositzement gemäß EN 197 und nicht genormte Zemente mit latent-hydraulischen und/oder puzzolanischen Materialien als Bestandteil, insbesondere als Hauptbestandteil.

Ganz besonders bevorzugt sind Portlandflugaschezement sowie Portlandkompositzement und Kompositzement mit Flugasche als Hauptbestandteil. Der Flugascheanteil kann gemäß der Erfindung bis zu 70 Gew.-% betragen, vorzugsweise liegt er im Bereich von 5 bis 50 Gew.-%, insbesondere im Bereich von 20 bis 40 Gew.-%, bezogen den Zement.

Die hydraulisch reaktive Feinstkomponente weist eine Feinheit von mindestens 10.000 cm²/g nach Blaine, vorzugsweise mindestens 12.000 cm²/g, auf und/oder Partikelgrößen D₅₀ von 3 bis 7 µm, vorzugsweise etwa 5 µm, und D₉₀ von 7 bis 20 µm, vorzugsweise etwa 12 µm. Als Material sind Zementklinker, besonders Portlandzementklinker, im Gemisch mit Calciumsulfat und

Kalkstein enthalten. Besonders bevorzugt sind Gemische enthaltend 60 - 95,9 Gew.-% Zementklinker, vorzugsweise 65 bis 89 Gew.-% 1 - 20 Gew.-% feines Calciumsulfat, vorzugsweise 5 bis 15 Gew.-% 0,1 - 20 Gew.-% Kalkstein, vorzugsweise 5 bis 15 Gew.-% und
bis zu 34,9 Gew.-%, vorzugsweise bis zu 15 Gew.-%, andere Substanzen, wobei die Summe der Bestandteile 100 Gew.-% beträgt. Von der Feinstkomponente sind bevorzugt von 50 bis 97,9 Gew.-%, insbesondere etwa 70 Gew.-% in dem erfindungsgemäßen Anreger enthalten. Eine Steigerung der Feinheit über 20.000 cm²/g nach Blaine hinaus bringt keine Vorteile. Als andere Substanzen sind alle nach EN 197 zulässigen Materialien möglich. Als Zementklinker ist Portlandzementklinker besonders geeignet. Ein typischer Zementklinker umfasst im wesentlichen die folgenden Phasen: C₃S von 40 bis 90 Gew.-%, C₂S von 1 bis 40 Gew.-%, C₃A von 0,1 bis 20 Gew.-% und C₄AF von 0,1 bis 20 Gew.-%.

Zur Herstellung der Feinstkomponente ist es bevorzugt, den in den üblichen Filtern bei der Mahlung von Zement aufgefangenen Mahlstaub als Material heranzuziehen. Besonders geeignet ist Mahlstaub aus der Herstellung von CEM I, CEM II/A-LL, CEM II/B-LL, CEM II/A-L, CEM II/B-L, CEM II/A-S, CEM II/B-S, CEM II/A-M, CEM II/B-M. Alternativ kann die Feinstkomponente durch Mahlen der gewünschten Bestandteile erhalten werden. Die Mahlung kann gemeinsam für alle oder einige Bestandteile oder für die Bestandteile separat erfolgen. Sinnvoll ist eine gemeinsame Mahlung der mit vergleichbarem Aufwand mahlbaren Bestandteile. Für Bestandteile, deren Mahlbarkeit sich stark unterscheidet, z.B. Zementklinker und Calciumsulfat, kann ein getrenntes Mahlen und anschließendes Mischen den Aufwand beim Mahlen reduzieren bzw. die Korngrößenverteilung enger und/oder gleichmäßiger machen.

Als Calciumsulfat eignen sich Gips, Anhydrit, Halbhydrat und Gemische davon. Es können sowohl natürliche als auch synthetische Calciumsulfate verwendet werden. Die Mahlfeinheit beträgt von 3500 bis 5000 cm²/g und/oder die Partikelgröße D₅₀ von 5 bis 20 µm, vorzugsweise etwa 10 µm, und D₉₀ von 10 bis 90 µm, vorzugsweise von 20 bis 80 µm und insbesondere etwa 40 µm, betragen. Das Calciumsulfat ist im Vergleich zu dem in der Feinstkomponente vorzugsweise vorhandenen feinen Calciumsulfat deutlich grobkörniger und kann dieses ideal ergänzen. Ein Anteil von 1 bis 30 Gew.-%, insbesondere etwa 20 Gew.-% Calciumsulfat in dem Anreger hat sich bewährt.

Es ist weiter möglich, dass feines Calciumsulfat separat von der Feinstkomponente als Teil des Calciumsulfat zugefügt wird. Dies bewährt sich vor allem, wenn die Feinstkomponente einen (zu) geringen oder keinen Gehalt an feinem Calciumsulfat aufweist. In diesem Fall wird als Calciumsulfat ein Gemisch von Calciumsulfat mit einer Mahlfeinheit von 3500 bis 5000 cm²/g und einem Calciumsulfat mit einer Mahlfeinheit von 10.000 bis 20.000 cm²/g verwendet.

Mit der Bezeichnung Alkalisulfat/Alkalisulfit ist sowohl Alkalisulfat als auch Alkalisulfit als auch ein Gemisch von Alkalisulfat und Alkalisulfit gemeint. Sulfit und Sulfat sind zweiwertige Anionen, daher sind auch Hydrogensulfat bzw. Hydrogensulfit jeweils mitumfasst. Als Alkalisulfat sind vor allem Natriumsulfat und Natriumhydrogensulfat, Kaliumsulfat und Kaliumhydrogensulfat, oder Gemische davon enthalten. Ebenso eignen sich Natrium- oder Kaliumsulfit oder -hydrogensulfit sowie Gemische davon und/oder mit Natriumsulfat, Natriumhydrogensulfat, Kaliumsulfat, Kaliumhydrogensulfat und deren Gemischen. Sulfite und Hydrogensulfite bieten den zusätzlichen Vorteil einer Chromatreduktion. Als Alkalisulft/Alkalisulfit ist Natriumsulfat besonders bevorzugt. Mengen Alkalisulfat/Alkalisulfit im Bereich von 1 bis 30 Gew.-%, insbesondere von etwa 10 Gew.-% sind gut geeignet.

Der Anreger enthält außerdem einen Komplexbildner aus der Gruppe der Alkanolamine, vorzugsweise Triisopropanolamin (= 1,1',1-Nitrilotripropan-2-ol) oder Triethanolamin (= N,N-Diethylethanamin). Die Menge an Komplexbildner liegt üblicherweise im Bereich von 0,1 bis 10 Gew.-%, insbesondere im Bereich von 2 bis 6 Gew.-%, des Anregers.

Es hat sich bewährt, wenn von 3 bis 9 Gew.-%, insbesondere etwa 6 Gew.-%, Anreger bezogen auf den Zement zugegeben werden.

Die Komponenten können als Gemisch oder als Einzelkomponenten oder als Gemisch einiger Komponenten und der restlichen Komponenten als Einzelkomponenten bzw. weiteres Gemisch einiger Komponenten zugegeben werden. Eine Zugabe zum Zement bzw. Bindemittel hat den Vorteil, dass im Zementwerk ein Zement bzw. Bindemittel mit optimal abgestimmten Mengen reproduzierbar hergestellt werden kann. Der Anreger kann aber auch, vorzugsweise als Gemisch, bei der Herstellung von hydraulischen Baustoffen wie Beton, Mörtel, Putz, Estrich etc. zugefügt werden. Damit ist eine Anpassung an spezielle Erfordernisse möglich, etwa eine Berücksichtigung der aktuellen Temperatur. Natürlich kann auch beides erfolgen, eine Zugabe zum Zement und eine weitere Zugabe bei der Verarbeitung auf der Baustelle.

Die Zugabemenge und/oder die Zusammensetzung des Anregers sollten so gewählt werden, dass in einem Zement maximal 1 Gew.-% Alkalisulfat/Alkalisulfit oder weniger und/oder maximal 0,2 Gew.-% Komplexbildner oder weniger und/oder maximal 4 Gew.-%, vorzugsweise maximal 3,5 Gew.-%, oder weniger SO₃ aus C$ enthalten sind, um den Anforderungen der EN 197 gerecht zu werden. Für Spezial-Bindemittel und hydraulische Baustoffe bestehen diese Begrenzungen nicht.

Der erfindungsgemäße Anreger, Bindemittel, die diesen enthalten, und das erfindungsgemäße Verfahren haben einer bessere Wirksamkeit im Vergleich mit reaktiven oder nicht reaktiven Feinstfüllstoffen allein. Im Gegensatz zu der Anregung mit Alkalisulfat führen sie nicht zu einer Beeinträchtigung der Druckfestigkeit nach 28 Tagen und die Verringerung der Menge an Alkali vermeidet eine Verschlechterung der Verarbeitbarkeit und Abnahme der Dauerhaftigkeit. Insgesamt zeigt ein erfindungsgemäßes Bindemittel sogar eine verbesserte Verarbeitbarkeit. Es wurde eine verbesserte Zusammenwirkung mit polymeren Zusatzstoffen beobachtet.

Im Rahmen der vorliegenden Erfindung werden zur Vereinfachung die in der Zementindustrie üblichen Abkürzungen: H - H₂O, C - CaO, A - Al₂O₃, F - Fe₂O₃, M - MgO, S - SiO₂ und $ - SO₃ verwendet. Verbindungen werden zumeist in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Rohmehls und der Art der Herstellung, durch die Substitution mit diversen Fremdionen variieren, wobei solche Verbindungen ebenfalls in den Schutzbereich der vorliegenden Erfindung fallen. Soweit nichts anderes angegeben ist, ist mit "reaktiv" eine hydraulische Reaktivität gemeint.

Im Rahmen der vorliegenden Erfindung meint Klinker ein Sinterprodukt, welches durch Brennen einer Rohstoffmischung bei erhöhter Temperatur erhalten wird und zumindest eine hydraulisch reaktive Phase enthält. Mit Zement wird ein mit oder ohne Zusatz weiterer Komponenten gemahlener Klinker oder ein entsprechend feines Produkt analoger Zusammensetzung (d.h. mit hydraulischer Reaktivität) bezeichnet. Wenn ein Bestandteil einer Mischung bezogen auf den Zement dosiert wird, schließt Zement eventuelle latent-hydraulische und/oder puzzolanische Materialien ein. Bindemittel oder Bindemittelmischung bezeichnet ein hydraulisch erhärtendes Gemisch, das Zement und typischerweise aber nicht zwingend weitere, fein gemahlene Komponenten enthält, und welches nach Zusatz von Wasser, ggfs. Zusatzmitteln und/oder Zusatzstoffen, und Gesteinskörnung zur Anwendung gelangt. Mit Baustoff werden hydraulisch erhärtende Gemische wie beispielsweise aber nicht ausschließlich Beton, Mörtel, Putz, Estrich, bezeichnet, welche ein Bindemittel enthalten und nach Einbringen/Aufbringen erhärten.

Unter Zusatzmittel werden üblicherweise Verflüssiger, Fließmittel, Luftporenbildner, Dichtungsmittel, Verzögerer, Erhärtungsbeschleuniger, Erstarrungsbeschleuniger, Einpresshilfen, Stabilisierer, Sedimentationsreduzierer, Chromatreduzierer und Schaumbildner verstanden. Erfindungsgemäß können solche Zusatzmittel in den üblichen Mengen verwendet werden. Vorzugsweise werden Verflüssiger und/oder Fließmittel verwendet.

Zusatzstoffe sind feine anorganische oder organische Stoffe, die zur gezielten Veränderung oder Erzielung von Eigenschaften zugefügt werden. Beispiele sind Gesteinsmehle, Silicastaub, Farbpigmente und Kunststoffdispersionen.

Gesteinskörnungen werden bei der Verarbeitung von Bindemitteln zugefügt, vor allem um Bindemittel zu sparen. Üblich sind grobe Gesteinskörnungen wie Kies für Beton und feine Gesteinskörnungen für Beton, Mörtel, Putz, Estrich usw. Erfindungsgemäß kommen Gesteinskörnungen in an sich bekannter Weise zum Einsatz.

Auch die Wassermenge entspricht dem üblichen, typisch sind Wasser/Zement-Verhältnisse von 0,2 bis 1,5, je nach Anwendung.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

Die Angabe des unbestimmten Artikels ein oder eine bedeutet keine Beschränkung der Anzahl, mit dieser Angabe ist auch eine Mehrzahl gleichartiger Gegenstände, Verfahren etc. umfasst.

### Vergleichsbeispiel 1

Die Druckfestigkeitsentwicklung von Bindemitteln wurde gemäß EN 196-1 an jeweils zwei Standard-Mörtelprismen (40 x 40 x 160 mm³) untersucht. Die Proben enthielten Zement/Sand/Wasser im Gewichtsverhältnis 1/3/0,5 und wurden zur Erhärtung bei 20 °C in gesättigter Ca(OH)₂ - Lösung gelagert. Als Bindemittel kamen Portlandzement (CEM I 52,5 N, HeidelbergCement AG), und Portlandflugaschezement aus 70 % Portlandzement (CEM I 52,5 N, HeidelbergCement AG) und 30 % Flugasche (Feinheit etwa 5000 cm²/g nach Blaine, Zusammensetzung entsprechend kieselsäurereicher Flugasche nach EN 197-1) zum Einsatz. Die Zusammensetzung des Portlandzementes war C₃S = 54 %, C₂S = 15 %, C₃A = 8 %, C₄AF = 11 %, Rest = 12 %, die Feinheit betrug ca. 4000 cm²/g nach Blaine und der SO₃ Gehalt 3,2 %.

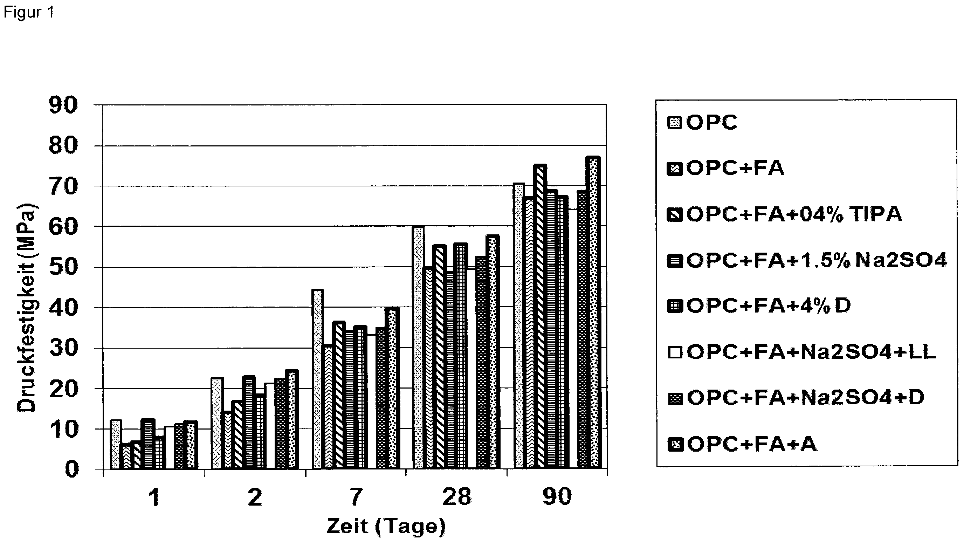

In Figur 1 ist die Wirkung des teilweisen Ersatzes von Portlandzement (OPC) durch Flugasche gezeigt. Die Druckfestigkeit des Portlandflugaschezementes, mit OPC + FA bezeichnet, war zu allen Zeiten deutlich geringer.

### Vergleichsbeispiel 2

Zu dem Portlandflugaschezement von Beispiel 1 wurden, bezogen auf den Portlandflugaschezement, 0,4 % Triisopropanolamin (TIPA) als Anreger zugefügt und wiederum die Druckfestigkeitsentwicklung gemessen. In Figur 1 ist zu sehen, dass diese Anregung erst nach 7 Tagen gut wirkt. Die Druckfestigkeit nach 90 Tagen übersteigt das Niveau des Portlandzementes ohne Zusätze.

### Vergleichsbeispiel 3

Zu dem Portlandflugaschezement von Beispiel 1 wurden analog Beispiel 2 1,5 % Natriumsulfat als Anreger zugefügt und wiederum die Druckfestigkeitsentwicklung gemessen. Figur 1 zeigt den Effekt dieser Anregung gemäß Stand der Technik. Während Natriumsulfat als Anreger die Festigkeit nach 1 und 2 Tagen steigert, führt dieser Anreger nach 28 Tagen zu einer noch weiteren Verminderung der Druckfestigkeit.

### Vergleichsbeispiel 4

Zu dem Portlandflugaschezement von Beispiel 1 wurden analog Beispiel 2 4 % einer hydraulisch reaktiven Feinstkomponente (D) mit einer Feinheit von etwa 12.000 cm²/g nach Blaine als Anreger zugefügt. Die Zusammensetzung war C₃S = 48 %, C₂S = 7 %, C₄AF = 11 %, Kalzit = 13 %, CaSO₄ = 9 % und Nebenbestandteile 10 %. Es wurde wiederum die Druckfestigkeitsentwicklung gemessen. In Figur 1 wird deutlich, dass diese Zugabe besonders zu frühen Zeiten nur eine minimale Steigerung der Druckfestigkeiten ergibt.

### Vergleichsbeispiel 5

Zu dem Portlandflugaschezement von Beispiel 1 wurden 0,5 % Natriumsulfat, 1 % Calciumsulfat und 4 % feiner Kalkstein (D₅₀ = 12,5 µm, D₉₀ = 47 µm), jeweils bezogen auf den Portlandflugaschezement, als Anreger zugefügt und wiederum die Druckfestigkeitsentwicklung gemessen. In Figur 1 ist zu sehen, dass dieser Anreger (Na2SO4 + LL) ähnlich wie Natriumsulfat alleine zu frühen Zeiten wirksam ist, dann aber die Druckfestigkeit zu späteren Zeiten gegenüber dem Portlandflugaschezement ohne Anreger vermindert.

### Vergleichsbeispiel 6

Zu dem Portlandflugaschezement von Beispiel 1 wurden 0,5 % Natriumsulfat, 1 % Calciumsulfat und 4 % einer hydraulisch reaktiven Feinstkomponente, jeweils bezogen auf den Portlandflugaschezement, als Anreger zugefügt. Die Druckfestigkeitsentwicklung in Figur 1 (Na2SO4 + D) ist ebenfalls zunächst gut, bleibt dann aber zu späteren Zeiten noch hinter der des nicht angeregten Portlandflugaschezements zurück.

### Beispiel 7

Zu dem Portlandflugaschezement von Beispiel 1 wurden 5,6 % erfindungsgemäßer Anreger (A) aus: 71,4 % hydraulisch reaktive Feinstkomponente (C₃S = 48 %, C₂S = 7 %, C₄AF = 11 %, Kalzit = 13 %, CaSO₄ = 9 % und Nebenbestandteile 10 %), 17,9 % Calciumsulfat, 8,9 % Natriumsulfat (4000 cm²/g nach Blaine) und 1,8 % Triisopropanolamin verwendet.

In Figur 1 ist erkennbar, dass der erfindungsgemäße Anreger zu allen Zeiten eine Steigerung der Druckfestigkeit bewirkt. Die Festigkeitsentwicklung wird beschleunigt, die Frühfestigkeit erreicht in etwa die Werte wie bei dem reinen Portlandzement, die Endfestigkeit liegt sogar höher. Der erfindungsgemäße Anreger schafft es also als einziger, sowohl eine gute Frühfestigkeit als auch eine hohe Festigkeit zu späteren Zeitpunkten zu gewährleisten.

### Beispiel 8

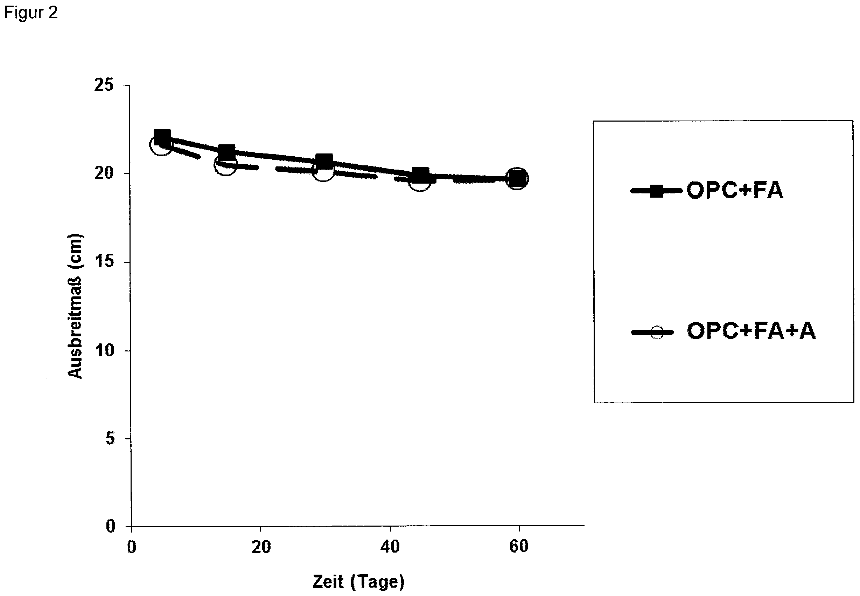

Als Indikator für die Verarbeitbarkeit wurde das Ausbreitmaß bestimmt. Dazu wurden frische Mörtel in zwei Lagen in einen Kegel (unterer Durchmesser = 100 mm, oberer Durchmesser = 70 mm, Höhe 60 mm) auf einem Rütteltisch aufgebracht und mit einem Metallstempel kompaktiert. Nach dem Entfernen des Kegels wurde der Tisch 30 Bewegungen in 30 Sek. unterworfen. Das Ausbreitmaß wurde als Mittelwert der Ausbreitung in zwei zueinander senkrechten Richtungen bestimmt. In Figur 2 ist das Ergebnis für den Portlandflugaschezement von Beispiel 1 mit und ohne Zusatz von 5,6 % des erfindungsgemäßen Anregers aus Beispiel 7 gezeigt. Eine Verschlechterung der Verarbeitbarkeit trat nicht auf.

## Patentansprüche

1. Anreger zur Frühfestigkeitssteigerung für Zement umfassend:
eine hydraulisch reaktive Feinstkomponente, mit einer Feinheit von mindestens 10.000 cm²/g nach Blaine, enthaltend Zementklinker,
Calciumsulfat und Kalkstein
ein Calciumsulfat mit einer Feinheit von 3500 bis 5000 cm²/g nach Blaine ein Alkalisulfat und/oder Alkalisulfit und
einen Komplexbildner aus der Gruppe der Alkanolamine.

2. Anreger gemäß Anspruch 1, **dadurch gekennzeichnet, dass** die hydraulisch reaktive Feinstkomponente eine Feinheit von 12.000 bis 20.000 cm²/g nach Blaine aufweist.

3. Anreger gemäß Anspruch 1 oder 2, **dadurch gekennzeichnet, dass** die hydraulisch reaktive Feinstkomponente Partikelgrößen D₅₀ von 3 bis 7 µm, vorzugsweise etwa 5 µm, und D₉₀ von 7 bis 20 µm, vorzugsweise etwa 12 µm, aufweist.

4. Anreger gemäß Anspruch 3, **dadurch gekennzeichnet, dass** die hydraulisch reaktive Feinstkomponente ein Gemisch enthaltend
60 - 95,9 Gew.-% Zementklinker, bevorzugt Portlandzementklinker,
1 - 20 Gew.-% Calciumsulfat
0,1 - 20 Gew.-% Kalkstein und
bis zu 34,9 Gew.-% andere Substanzen
ist, wobei die Summe der Bestandteile 100 Gew.-% beträgt.

5. Anreger gemäß mindestens einem der Ansprüche 1 bis 4, **dadurch gekennzeichnet, dass** das Calciumsulfat ausgewählt ist unter Gips, Anhydrit, Halbhydrat und Gemischen davon.

6. Anreger gemäß mindestens einem der Ansprüche 1 bis 5, **dadurch gekennzeichnet, dass** das Calciumsulfat eine Partikelgröße D₅₀ von 5 bis 20 µm, vorzugsweise etwa 10 µm, und D₉₀ von 10 bis 90 µm, vorzugsweise etwa 40 µm aufweist.

7. Anreger gemäß mindestens einem der Ansprüche 1 bis 6, **dadurch gekennzeichnet, dass** das Alkalisulfat und/oder Alkalisulfit ausgewählt ist oder sind unter Natriumsulfat und Natriumhydrogensulfat, Kaliumsulfat und Kaliumhydrogensulfat, Natriumsulfit und Natriumhydrogensulfit, oder Gemischen davon, und insbesondere Natriumsulfat ist.

8. Anreger gemäß mindestens einem der Ansprüche 1 bis 7, **dadurch gekennzeichnet, dass** der Komplexbildner ausgewählt ist unter Triisopropanolamin, Triethanolamin und Gemischen davon, und vorzugsweise Triisopropanolamin ist.

9. Anreger gemäß mindestens einem der Ansprüche 1 bis 8, **dadurch gekennzeichnet, dass** der Anreger umfasst:
- Feinstkomponenten von 50 bis 97,9 Gew.-%,
- Calciumsulfat von 1 bis 30 Gew.-%,
insbesondere etwa 20 Gew.-%
- Alkalisulfat und/oder Alkalisulfit von 1 bis 30 Gew.-%,
insbesondere etwa 10 Gew.-%
- Komplexbildner von 0,1 bis 8 Gew.-%,
insbesondere etwa 2 bis 6 Gew.-%,
wobei sich die Anteile insgesamt auf 100 % addieren.

10. Bindemittel enthaltend Zement und einen Anreger gemäß mindestens einem der Ansprüche 1 bis 9.

11. Bindemittel gemäß Anspruch 10, **dadurch gekennzeichnet, dass** der Zement ausgewählt ist unter Portlandhüttenzement, Portlandsilicastaubzement, Portlandpuzzolanzement, Portlandflugaschezement, Portlandschieferzement, Portlandkalksteinzement, Portlandkompositzement, Hochofenzement, Puzzolanzement, und Kompositzement, insbesondere unter Portlandflugaschezement sowie Portlandkompositzement und Kompositzement mit Flugasche als Hauptbestandteil.

12. Verfahren zur Steigerung der Frühfestigkeit von Baustoffen auf Basis von hydraulischen Bindemitteln, welche Zement enthalten, **dadurch gekennzeichnet, dass** dem Baustoff ein Anreger gemäß mindestens einem der Ansprüche 1 bis 9 zugefügt wird.

13. Verfahren gemäß Anspruch 12, **dadurch gekennzeichnet, dass** die hydraulisch reaktive Feinstkomponente, das Calciumsulfat, das Alkalisulfat und/oder Alkalisulfit und der Komplexbildner einzeln oder als Einzelkomponente(n) und Gemisch von zwei oder drei davon dem Zement und/oder dem Bindemittel und/oder dem Baustoff zugefügt werden, oder alle Komponenten als Gemisch bereitgestellt und dem Zement und/oder dem Bindemittel und/oder dem Baustoff zugefügt werden.

14. Verwendung eines Anregers gemäß einem der Ansprüche 1 bis 9 zur Steigerung der Frühfestigkeit von Baustoffen auf Basis von hydraulischen Bindemitteln, welche Zement enthalten, wobei der Anreger dem Zement zugefügt wird.

15. Verwendung gemäß Anspruch 14, **dadurch gekennzeichnet, dass** 3 bis 9 Gew.-% Anreger bezogen auf den Zement zugefügt werden.

## Claims

1. Activator for increasing the early strength for cement, comprising:
a hydraulically reactive very fine component with a fineness of at least 10,000 cm²/g according to Blaine, containing cement clinker, calcium sulphate and limestone
a calcium sulphate with a fineness from 3,500 to 5,000 cm²/g according to Blaine
an alkali sulphate and/or an alkali sulphite, and
a complexing agent selected from the group of alkanolamines.

2. Activator according to claim 1, **characterized in that** the hydraulically reactive very fine component has a fineness from 12,000 to 20,000 cm²/g according to Blaine.

3. Activator according to claim 1 or 2, **characterized in that** the hydraulically reactive very fine component has D₅₀ particle sizes from 3 to 7 µm, preferably about 5 µm, and D₉₀ from 7 to 20 µm, preferably about 12 µm.

4. Activator according to claim 3, **characterized in that** the hydraulically reactive very fine component represents a mixture containing:
60 - 95.9 % by weight cement clinker, preferably Portland cement clinker,
1 - 20 % by weight of calcium sulphate
0.1 - 20 % by weight of limestone, and
up to 34.9 % by weight of other substances,
wherein the sum of the ingredients amounts to 100 % by weight.

5. Activator according to at least one of claims 1 to 4, **characterized in that** the calcium sulfate is selected from gypsum, anhydrite, hemihydrate, and mixtures thereof.

6. Activator according to at least one of claims 1 to 5, **characterized in that** the calcium sulphate has a particle size D₅₀ from 5 to 20 µm, preferably about 10 µm, and D₉₀ from 10 to 90 µm, preferably of about 40 µm.

7. Activator according to at least one of claims 1 to 6, **characterized in that** the alkali sulphate and/or the alkali sulphite is or are chosen from sodium sulphate and sodium hydrogen sulphate, potassium sulphate and potassium hydrogen sulphate, sodium sulphite and sodium hydrogen sulphite, or mixtures thereof, and in particular represents sodium sulphate.

8. Activator according to at least one of claims 1 to 7, **characterized in that** the complex former is selected from triisopropanolamine, triethanolamine and mixtures thereof, and preferably is triisopropanolamine.

9. Activator according to at least one of claims 1 to 8, **characterized in that** the activator comprises:
- very fine components from 50 to 97.9 % by weight,
- calcium sulphate from 1 to 30 % by weight,
in particular approximately 20 % by weight
- alkali sulphate and/or alkali sulphite from 1 to 30 % by weight,
in particular about 10 % by weight
- complexing agents from 0.1 to 8 % by weight,
in particular approximately 2 to 6 % by weight,
the proportions adding up to 100 % in total.

10. Binder containing cement and an activator according to at least one of claims 1 to 9.

11. Binder according to claim 10, **characterized in that** the cement is selected from Portland slag cement, Portland silica fume cement, Portland pozzolan cement, Portland fly ash cement, Portland slate cement, Portland limestone cement, Portland composite cement, blast-furnace cement, pozzolan cement and composite cement, in particular from Portland fly ash cement, as well as Portland composite cement and composite cement with fly ash as the main constituent.

12. Process for increasing the early strength of building materials based on hydraulic binders, which contain cement, **characterized in that** an activator according to at least one of claims 1 to 9 is added to the building material.

13. The method according to claim 12, **characterized in that** the hydraulically reactive very fine component, the calcium sulfate, the alkali sulphate and/or alkali sulphite, and the complexing agent are added to the cement and/or the binder and/or the building material individually or as single component(s) and mixture of two or three thereof, or all components are provided as a mixture and added to the cement and/or the binder and/or the building material.

14. Use of an activator according to any one of claims 1 to 9 for increasing the realry strength of building materials based on hydraulic binders, which contain cement, wherein the activator is added to the cement.

15. Use according to claim 14, **characterized in that** from 3 to 9 % by weight of activator is added to cement.

## Revendications

1. Activateur destiné à augmenter la résistance initiale pour des ciments, comprenant:
un composant de taille micrometrique apte à une réaction hydraulique,
possédant une finesse d'au moins 10.000 cm²/g selon Blaine, contenant un clinker de ciment, du sulfate de calcium et du calcaire
un sulfate de calcium possédant une finesse de 3.500 à 5.000 cm²/g selon Blaine
un sulfate alcalin et/ou un sulfite alcalin et
un formateur de complexes choisi parmi le groupe des alcanolamines.

2. Activateur selon la revendication 1, **caractérisé en ce que** le composant de taille micrometrique apte à une réaction hydraulique présente une finesse de 12.000 à 20.000 cm²/g selon Blaine.

3. Activateur selon la revendication 1 ou 2, caractérisé comme composant de taille micrometrique apte à une réaction hydraulique présente des granulométries D₅₀ de 3 à 7 µm, de préférence d'environ 5 µm, et D₉₀ de 7 à 20 µm, de préférence d'environ 12 µm.

4. Activateur selon la revendication 3, caractérisé comme composant de taille micrometrique apte à une réaction hydraulique est un mélange contenant:
60 - 95,9 % en poids de clinker de ciment, de préférence de clinker de ciment Portland,
1 - 20 % en poids de sulfate de calcium
0,1 - 20 % en poids de calcaire et
jusqu'à 34,9 % en poids d'autres substances
dans lequel la somme des constituants s'élève à 100 % en poids.

5. Activateur selon au moins une des revendications 1 à 4, **caractérisé en ce que** le sulfate de calcium est choisi parmi de gypse, d'anhydrite, d'hémihydrate, ainsi que leurs mélanges.

6. Activateur selon au moins une des revendications 1 à 5, **caractérisé en ce que** le sulfate de calcium présente une granulométrie D₅₀ de 5 à 20 µm, de préférence d'environ 10 µm, et D₉₀ de 10 à 90 µm, de préférence d'environ 40 µm.

7. Activateur selon au moins une des revendications 1 à 6, **caractérisé en ce que** le sulfate alcalin et/ou le sulfite alcalin est ou sont choisi(s) parmi le sulfate de sodium et l'hydrogénosulfate de sodium, le sulfate de potassium et l'hydrogénosulfate de potassium, le sulfite de sodium et l'hydrogénosulfite de sodium, ou leurs mélanges, et représente en particulier du sulfate de sodium.

8. Activateur selon au moins une des revendications 1 à 7, **caractérisé en ce que** le formateur de complexes est choisi parmi la triisopropanolamine, la triéthanolamine, ainsi que leurs mélanges, et de préférence représente du triisopropanolamine.

9. Activateur selon au moins une des revendications 1 à 8, **caractérisé en ce que** l'activateur comprend:
- des composants très fins de 50 à 97,9 % en poids,
- du sulfate de calcium de 1 à 30 % en poids,
en particulier à environ 20 % en poids
- du sulfate alcalin et/ou du sulfite alcalin de 1 à 30 % en poids,
en particulier à environ 10 % en poids,
- des agents complexants de 0,1 à 8 % en poids,
en particulier d'environ 2 à 6 % en poids,
dans lequel les fractions s'additionnent pour donner 100 % au total.

10. Liant contenant du ciment et un activateur selon au moins une des revendications 1 à 9.

11. Liant selon la revendication 10, **caractérisé en ce que** le ciment est choisi parmi du ciment de laitier Portland, du ciment de fumée de silice Portland, du ciment de pouzzolane Portland, du ciment de cendres volantes Portland, du ciment de schiste Portland, du ciment de calcaire Portland, du ciment de type composite Portland, du ciment de haut-fourneau, du ciment de pouzzolane et du ciment composite, en particulier parmi du ciment de cendres volantes Portland, de même que du ciment de type composite Portland et du ciment composite, avec des cendres volantes à titre de constituant principal.

12. Procédé destiné à augmenter la résistance initiale de matériaux de construction à base de liants hydrauliques qui contiennent du ciment, **caractérisé en ce qu'**on ajoute au matériau de construction un activateur selon au moins une des revendications 1 à 9.

13. Procédé selon la revendication 12, **caractérisé en ce qu'**on ajoute le composant de taille micrometrique apte à une réaction hydraulique, le sulfate de calcium, le sulfate alcalin et/ou le sulfite alcalin et le formateur de complexes de manière individuelle ou sous la forme de composants individuels et d'un mélange de deux ou trois d'entre eux au ciment et/ou au liant et/ou au matériau de construction, ou bien on met à disposition tous les composants sous la forme d'un mélange et on ajoute ce dernier au ciment et/ou au liant et/ou au matériau de construction.

14. Utilisation d'un activateur selon l'une quelconque des revendications 1 à 9 destiné à augmenter la résistance initiale de matériaux de construction à base de liants hydrauliques qui contiennent du ciment, dans laquelle l'activateur est ajouté au ciment.

15. Utilisation selon la revendication 14, **caractérisée en ce qu'**on ajoute de 3 à 9 % en poids d'activateur, rapportés au ciment.
